## Europäisches Patentamt

(19) **European Patent Office**

**Office européen des brevets**

(11) Publication number: **0 150 727**
**B1**

(12) **EUROPEAN PATENT SPECIFICATION**

(45) Date of publication of the patent specification:
**25.11.87**

(51) Int. Cl.⁴: **A 23 C 19/04,** A 23 C 19/032

(21) Application number: **85100182.6**

(22) Date of filing: **10.01.85**

(54) **A process for producing cheese.**

(30) Priority: **16.01.84 DK 188/84**

(43) Date of publication of application:
**07.08.85 Bulletin 85/32**

(45) Publication of the grant of the patent:
**25.11.87 Bulletin 87/48**

(84) Designated Contracting States:
**AT BE CH DE FR GB IT LI LU NL SE**

(56) References cited:
**EP-A-0 068 691**
**US-A-2 450 814**
**US-A-2 482 520**

**JOURNAL OF DAIRY SCIENCE, vol. 47, no. 11, 1964, pages 1181-1187; A.G. RAND et al.: "Effect of pH and sodium chloride on activation of prorennin" N. BERRIDGE: "The enzymes", 1 Pt. II, 1951, pages 1083-1094, Ed. by Academic Press, New York, US; J.G. DAVIS: "Cheese", vol. 1, 1965, pages 246-247, J. & A. Churchill Ltd., London, GB;**

(73) Proprietor: **CHR. HANSEN'S LABORATORIUM A/S, Sankt Annae Plads 3, DK- 1250 Copenhagen K (DK)**

(72) Inventor: **Hoier, Erik, Brammingevej 8 st. th, DK- 2100 Copenhagen O (DK)**
Inventor: **Harboe, Marianne Kirsten, Kulsviervej 149, DK- 2800 Lyngby (DK)**
Inventor: **Peitersen, Nicolai, Gadevangen 55, DK- 2800 Lyngby (DK)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Description

The present invention relates to a method of accelerating cheese ripening in which, during the process of manufacturing the cheese, en inactive milk-clotting enzyme is added to the cheese milk.

## Technical background

In traditional cheesemaking, cheese is prepared by adding a starter culture and rennet to warm milk to form a curd (setting). When the desired consistency and strength has been obtained, the curd is cut followed by separation of the whey from the curds, e.g. by draining, and finally salting, pressing and storing (maturing) the resulting cheese for 2-24 months at 2-16°C.

However, in this process a major loss of milk protein occurs through the removal of whey so that the yield of cheese is decreased. In a more recently developed cheesemaking process which aims at improving the yield, the milk is concentrated to approximately the fat and protein content desired in the finished product after which a starter culture, rennet and salt are added. No significant whey drainage occurs from the curd, and consequently all the whey proteins normally lost when the whey is removed are retained in the concentrate resulting in an increase in yield of about 15 %.

When making cheese by this process, however, using concentrated milk, it has been found that when the conventional amount of rennet is added (about 30-40 ml/100 kg of milk when the rannet preparation employed is Chr. Hansen's standard rennet as defined later), the coagulation is undesirably fast causing the curd to set before a homogenous admixture of the rennet has been obtained. Experiments heve shown that it is necessary to reduce the amount of rennet added to about 10-20 ml/100 kg of milk (especially in milk which has been concentrated more than 5 times) to maintain a coagulation period of about 20-30 minutes and a proper admixture of the rennet. As rennet is responsible for the hydrolysis of the casein in the curd (necessary for maturation), the peptides formed by the action of rennet being further decomposed, principally by starter culture enzymes, into smaller peptides and amino acids, the decreased amount of rennet added leads to a decrease in the rate of cheese matu ration (cf. de Koning et al., *Neth. Milk Dairy J. 35*, 1981, pp. 35-46), i.e. a longer storage period which is not cost-effective.

## Disclosure of the invention

The object of the present invention is to accelerate cheese ripening by adding an inactive milk-clotting enzyme to the miik, which enzyme is then activated during manufacture.

Accordingly, the present invention relates to a process for accelerating the ripening of cheese produced from concentrated milk, in which

an inactive milk-clotting enzyme and optionally chymosin or another suitable proteolytic enzyme is added to the concentrated milk, optionally simuitaneously with or after adding a starter culture, to form a curd,

at least part of the inactive enzyme is activated, and

the resulting curd is stored under the usual conditions for storing cheese in order to convert it to the ripened cheese.

In the present context, the term "inactive milk-clotting enzyme" is defined as an enzyme in inactive form which has little or no effect, i.e. no discernible coagulating activity, when added to the milk at the beginning of the cheesemaking process and which will substantially remain inactive unless subjectad to the conditions which prevail during the manufacturing process, but which, when activated, will accelerate &heese ripening. In order to affect the initial proteolysis of the casein and the formation of curd, it is preferred to add one or more active proteolytic enzymes such as chymosin or another suitable proteolytic enzyme, e. g. pepsin or proteases of microbial origin, the only requirement being that the protease be one which is not detrimental to the usual processes in cheesemaking.

US Patent No. 2 450 814 discloses a process for preparing processed cheese in which a pancreatic zymogen, e.g. trypsinogen and chymotrypsinogen, is addad to milk together with chymosin and a lactic acid startar culture. The pancreatic zymogen is then activated by means of an activating agent, after which curd is heated to enhance the action of the enzymes formed from the zymogens. After a brief storage period, the curd is moltan in order to inactivate the enzymes formed from tha zymogens. The molten curd is then pourad into packages and allowed to cool.

As opposed to the method of the present invention, if the process disclosed in the U.S. patent were to be used for preparing traditional types of cheese, the proteolytic activity of the activated pancreatic enzymes employed according to the US patent would result in a complete decomposition of the milk proteins to smaller peptides and amino acids within a fairly brief period of time. Therefore, the method disclosed in US Patent No. 2 450 814 is not suitable for preparing traditional types of cheese as these should be melting matured under the usual conditions and cannot be subjected to the melting process necessary to inactivate the pancreatic enzymes used in the process of the US Patent.

Activation of the inactive enzyme used in the process of the present invention may be performed in various ways depending on the nature of the enzyme. A preferred way, however, of causing activation or, rather, of accelerating activation of the inactive enzyme is to adjust the pH of the curd containing the inactive enzyme to a pH below 6.8, in particular a pH between 6.5 and 4.0, such as a pH of 4.6-6.2. Normally, a pH in the range of 4.7-5.5 will be considered suitable for the present purpose.

The acidification necessery to activate the inactive enzyme may for instance take place by adding a suitable acid, especially an organic acid such as lactic acid or glucono delta lactone, to the milk before coagulation in amounts depending on the desired pH, concentration of solids in the milk, etc. More conveniently, the acidification may be effected through the action of starter culture bacteria which, in conventional cheesemaking processes are added in order to ferment lactose and to cause a further decomposition of the milk proteins into smaller peptides and amino acids. Starter cultures are cultures of lactic acid bacteria which, according to the present invention, are added to the milk to provide the acidic conditions contributing to the activation of the inactive enzyme through their production of lactic acid as well as to provide proteolytic enzymes which do not participate in initiating casein proteolysis, but which contribute to the above-mentioned furthar decomposition of the casein coagulum. When a starter culture is added, a gradual activation of at least part of the inactive enzyme will typically occur as a function of the formation of lactic acid. Further activation may be caused by the action of proteases which, for instance, may be provided by the starter culture bacteria, cf. the discussion below.

The starter culture may be added in the form of freeze-driad, deepfrozen or liquid culture in an amount of about $1 \times 10^6$ - $1 \times 10^7$ colony-forming units/g of cheese milk. The starter culture may either be added prior to or simultanaously with the inactive enzyme and, optionally, the active protease.

According to the invention, the inactive milk-clotting enzyme is added to the milk in an amount of 10-1000 mg/100 kg of milk, praferably 20-200 mg/100 kg of milk, of the commercially purified enzyme depending on the potential activity of the enzyme. In the present context, the term "potential activity" refers to the activity possessed by the inactive enzyme when activatad. For most practical purposes, it is preferred that the potential activity is at least 10 CHU/ml. One CHU (Chr. Hansen's Unit) is defined as the milk-clotting activity present when 1 ml of enzyme solution is able to clot 50 g of substrate (prepared by dissolving 110 g of low heat treated skimmilk powder in 1 l of a 4.5 mM $CaCl_2$ solution) at a pH of 6.5 in 420 seconds at 32° C (cf. G.A.L. Rothe et al., *J. of Dairy Research 43*, 1976, p. 87). The term "commercially purified" is intended to mean that undesirable enzyme activities and other undesirable components or impurities have substantially been removed from the final inactive enzyme preparation.

Expressed in different terms and using a standard rennet preparation as a comparison, for instance Chr. Hansen's standard rennet which contains 57 CHU/ml, roughly corresponding to about 1 mg of active enzyme/ml of enzyme preparation, the amount of inactive enzyme added will normally be adjusted so that its potential activity (activity when activated) will correspond to the activity of the standard rennet preparation in the amount added in typical cheesemaking processes (about 20-40 ml for Chr. Hansen's standard rennet per 100 kg of milk); on this basis, it is possible to calculate the desired CHU content per 100 kg of milk and thus the amount of inactive enzyme to be added, the potential activity of which is known. However, the inactive enzyme is often added in an excess to compensate for the possibility that not all of the inactive enzyme is activated, or not activated sufficiently fast to ensure a speedier cheese ripening within the desired period of time. This excess will usually be in the order to 1-5 times the calculated amount to be added.

The concentrated milk employed in the process of the invention may be derived from any convenient source such as milk from ruminants such as cows, sheep or goats, and may be concentrated reconstituted milk, whole milk, skimmilk or milk mixed with a variety of vegetable proteins (soy, peanut, wheat and other grains, alfalfa or a mixture thereof) in the form of a slurry of the powdered vegetable protein or proteins.

The milk may be concentrated in a variety of ways, e.g. by evaporation or spray-drying followed by reconstitution, but is preferably concentrated by membrane filtration, i.e. ultrafiltration in which molecules of a molecular weight of up to about 20 000 are allowed to pass the membrane, or optionally diafiltration before or after ultrafiltration, or, in some cases, possibly hyperfiltration in which molecules of a molecular weight of up to about 500 are allowed to pass the membrane, which means that a larger amount of dry matter is retained to form the curd. Membrane filtration may be performed by cycling milk across a membrane such as a membrane of a suitable organic polymer or an inorganic ceramic material at an elevated pressure untii the desired content of protein has been attained; in this process, water and soluble components as well as low molecular weight components are passed through the membrane (depending on the pore size of the membrane) while proteins (casein, albumin and globulin), fats, insoluble salts and bacteria (if these have already been added to the milk) are retained. The process may be one in which pre-concentration is performed in one system and the pre-concentrated milk is passed to another system in which the concentration proper is performed; by this means a particularly high concentration of solids is obtained (cf. US Patent No. 4 355 048).

It is preferred to add the inactive milk-clotting enzyme to the concentrate together with the reduced amount of an active proteolytic enzyme such as chymosin, e.g. in the form of a standard rennet preparation, required when using concentrated milk. At least part of the inactive enzyme is then activated during the later manufacturing or maturation process as described above to make up for the low amount of rennet which, as mentioned above, has been a drawback in making cheese from concentrated milk as it necessitates a longer maturation period. When the inactive enzyme, or at least part of it (the activation being gradual, depending on time, pH, and enzyme concentration) is activated according to the invention, the rate of proteolysis of the casein is increased so that the cheese ripening is accelerated. Thus, the present invention has made it possible to combine the advantages of a greater yield obtained by employing concentrated milk and a shorter storage period required to mature the cheese.

The active chymosin or another suitable proteolytic enzyme is advantageously added in an amount of 0-200 mg/100 kg of milk (0 referring to the event that no such active enzyme is added), preferably 20-100 mg/100 kg of milk of the commercially purified enzyme depending on the activity of the enzyme. The amount of active enzyme to be added may be calculated as indicated above in such a way that the activity corresponds to that which causes a satisfactory coagulation period in concentrated milk. The ratio between active and inactive enzyme may likewise be calculated as indicated above.

It is at present contemplated that the types of cheese which may advantageously be prepared by the process of the invention are both soft cheeses (containing about 40 % of dry matter) such as cheeses corresponding to Camembert or Brie and hard or semi-hard cheeses (with a dry matter content of about 50-70%) similar to Edam, Cheddar or Danbo. The cheeses which are assumed to be most advantageously prepared by the method of the invention are cheeses requiring a long storage period even in traditional cheesemaking to mature such as semi-hard or hard cheeses. Incidentally, when producing some semi-hard or hard cheeses, it may also prove necessary further to reduce the content of liquid by evaporation such as vacuum evaporation, by whey draining (best at lower pH values as the loss of rennet is less at acid pH values) or by concentrating the milk more than 5 times.

The inactive milk-clotting enzyme used in the process of the invention is preferably a zymogen. A zymogen is the inactive precursor of an enzyme, the inactivity of which is caused by the presence of a specific sequence (activation segment) on the protein chain. During activation this sequence is split off to form the active enzyme by the action of an active protease cleaving the molecules in the presence of an acid; this protease may be the active enzyme corresponding to the zymogen in question (autocatalysis), but may also be another protease; the cleavage is determined by a decrease in molecular weight. In proteolytic enzymes of animal origin which are normally digestive enzymes, the enzyme is secerned in zymogen form from the cells of the gastric mucosa. For the present purposes, digestive enzymes of mammals are particularly useful such as enzymes from cattle, swine, sheep and goats, especially those of ruminants, and particularly those of young animals of these species. The zymogen may also be one derived from the digestive tract of domestic fowl. As the purpose in nature of milk-clotting proteases is to help the young mammal digest its mother's milk, the milk-clotting enzymes and precursors therefor used in the process of the invention may advantageously be derived from the same animal species as that contributing the milk.

The zymogen may also be produced by recombinant DNA techniques. In this process, the inactive milk-clotting enzyme is advantageously a zymogen, preferably one of animal origin such as those exemplified above, particularly prochymosin or prochymosin modified genetically or chemically. By recombinant DNA methods, a DNA fragment comprising the gene or genes coding for a specific zymogen is inserted in a microorganism which is capable of expressing these genes on a suitable vector such as a plasmid. The microorganism is then grown on an industrial scale by fermentation processes well known in the art and the zymogen may be recovered from the culture. (A more detailed description of recombinant DNA production of prochymosin is given in, e.g., British Published Specification No. 2 100 737.)

The most preferred inactive enzyme employed in the process of the present invention is prochymosin which is the inactive precursor of chymosin (which for instance is obtained from the glandular layer of the fourth stomach of the calf). Prochymosin - like a number of other inactive precursors of proteolytic enzymes of the digestive tract - is activated when passing the acid (HCl) producing cells in the stomach lining before being secerned into the stomach.

The molecular weight of prochymosin has been determined to be 40 777 by amino acid sequence analysis (cf. Bent Foltmann et al., "The Complete Amino Acid Sequence of Prochymosin", *Proc. Natl. Acad. Sci. USA* vol. 74, 1977, pp. 2321-2324) and its isoelectric point is at a pH of about 5.0 as determined by paper electrophoresis (cf. Bent Foltmann, "A Review on Prorennin and Rennin", *Comptes Rendus de Travaux du Laboratoire Carlsberg* vol. 35, Copenhagen, 1966, p. 173). Prochymosin is comparatively stable at room temperature under moderately alkaline conditions up to a pH of about 9. At a pH of more than 11, it quickly loses its potential milk-clotting activity. Prochymosin may be obtained by extraction from calf stomach substantially as described in Example 1. The zymogen may be further purified by precipitation and reprecipitation (optionally followed by ion exchange chromatography. e.g. on columns of DEAE cellulose using a buffer such as a phosphate buffer of a pH of about 5.5-5.8 as the eluent) (cf. Foltmann, *op.cit.,* pp. 164-169). Prochymosin is preferably stored under sterile conditions in freeze-dried, vacuum-dried or liquid form at about 0-20°C and at a pH of about 6.5-8.5; under these conditions, it is stable for several months.

The activation of prochymosin to chymosin is caused by a limited proteolysis in which the molecular weight is reduced from 40 777 to 35 652, due to the first 42 N-terminal amino acids of the prochymosin molecules having been cleaved off. The activation process is irreversible, and the active enzyme does not recombine with the liberated peptide to form a complex. It has been found (cf. Foltmann, *op.cit.,* pp. 174-189) that the conversion of prochymosin to chymosin is accelerated at pH values below 5. For instance, at pH 4.7 and at room temperature, the activation of prochymosin is complete within 7-15 hours at a concentration of about 1 mg/ml (in an experiment conducted in buffer - in curd a longer period is required). At a pH of more than 5, e.g.

4

a pH of about 5.2 (the pH at which cheese is usually prepared), the activation is somewhat slower, and at the enzyme concentration employed, the activation of prochymosin to chymosin may be expected to take place as a continuous process over a period of several weeks to several months. Experiments have shown that in curd at a pH of about 4.8 about 30 % of the prochymosin had been activated after 3 weeks.

As the conversion of prochymosin to chymosin is the result of an autocatalytic reaction (the chymosin formed catalyses the conversion process), it is an advantage, in accordance with the invention, to add chymosin to the cheese milk simultaneously with the prochymosin and similarly, if another zymogen is used, such as a pepsinogen, the corresponding active enzyme (e.g. pepsin) may be added in order to increase the initial reaction velocity. However, it should be noted that other proteolytic enzymes may exhibit a similar effect. This finding may be utilized to further accelerate the activation by adding proteolytic enzymes. These enzymes should not have too strong a proteolytic activity as this may result in complete rather than partial cleavage of the prochymosin molecules and/or inactivation of the chymosin formed. Suitable proteases for this purpose are other milk-clotting proteases such as microbial proteases, including those provided by the starter culture bacteria. As stated above, the presence of proteolytic enzymes in the curd is also desirable as they contribute further to the decomposition of milk proteins into smaller peptides and amino acids (i.e. cheese ripening).

Though prochymosin/chymosin is the preferred milk-clotting enzyme employed in the process of the invention, other such enzymes and enzyme precursors may also be used, as mentioned above. Another suitable enzyme capable of coagulating milk (and its companion zymogen) is pepsin and pepsinogen produced in the stomach of most mammals, e.g., cattle, sheep, goats, and swine, as well as domestic fowl. It has been found that pepsin shows a rather close resemblance to chymosin with respect to molecular weight and other physical properties. The conversion of pepsinogen to pepsin is also accelerated at a pH below about 5.0, and at pH values near 5, the process is also mainly autocatalytic though also catalysable by means of other proteases, as mentioned above.

In addition to zymogens, the inactive enzyme used in the process of the invention may be an active enzyme which has been inactivated by means of an inhibitor. When added to the milk, it is converted to the active form. The inhibition must thus be one which is reversible and inhibitors chosen accordingly. Examples of inhibitors for milk-clotting enzymes are

1) peptides liberated from pepsinogen during activation,
2) polyiysine,
3) pepstatin and pepstatin analogues,
4) synthetic peptides as competitive inhibitors.

It is at present contemplated that at least some of these inhibitors (those which do not destroy the enzyme molecule, and those which do not cause an irreversible reaction) may be used in the process of the invention to render the active milk-clotting enzyme completely or partially inactive prior to adding the enzyme to the milk. The inactivation may be performed by mixing a suitable amount of the inhibitor in question with the enzyme under suitable conditions, primarily with respect to pH, and maintaining these conditions until use.

It is also contemplated that reactivation will take place in the curd due to the presence of proteolytic enzymes which will destroy (cleave) the inhibitor or, in cases where a competitive inhibitor (the inhibitor competes with the substrate (casein) for the same binding site on the enzyme - the percentage of inhibition of the enzyme is a function of the ratio of concentration of inhibitor and the substrate) is employed, due to the dilution of the inhibitor in the milk which will diminish its effect.

The enzymes to be inactivated and later re-activated according to the invention may be the active form of any of the zymogens described above. Alternatively, the enzymes may also be of microbial origin. The microorganism employed to produce the enzyme in question may either be one which, in nature, produces enzymes which are suitable for coagulating milk, or a precursor therefor, e.g. a variety of fungi, examples of which are *Mucor miehei* (cf. M. Ottesen and W. Rickert, "The Acid Protease of *Mucor miehei*", *Methods in Enzymology* vol. 19, 1970, pp. 459-460), *Mucor pusillus* (cf. K. Arima et al., "Milk-clotting Enzymes from *Mucor pusillus* var. Lindt", *Methods in Enzymology* vol. 19, 1970, pp. 446-459) and *Endothia parasitica* (cf. J.R. Whitaker, "Protease of *Endothia parasitica*", *Methods in Enzymology* vol. 19, 1970, pp. 436-445). In order to produce a sufficient amount of the enzyme or enzyme precursor, such microorganisms may be cultivated on a large scale by fermentation processes which are well-known in the art, and the enzyme may be recovered from the culture in a manner known per se. The organism may also be one which is made to produce the desired enzyme by genetic modification such as by mutagenizing the organism, e.g. by means of ultraviolet radiation, ionizing radiation or a suitable chemical mutagen, or by recombinant DNA techniques as outlined above, but substituting the chymosin gene for the prochymosin gene.

## Example 1

Chymosin and prochymosin were extracted from 225 g of calf stomach by mixing it with 350 ml of a 2 % solution of $NaHCO_3$ (pH 7.8) for 1 hour at about 5°C. After cooling for 15 minutes to 0°C, the extract was centrifuged and clarified by adding 0.33 M $Al_2(SO_4)_3$ to a pH of 4.5 with stirring, followed by the addition of 0.5 M $Na_2HPO_4$ to a pH of 6.5. 0.02 % of sodium azide was added to the preparation as a preservative.

The resulting preparations were found to contain:
45.3 CHU of prochymosin/ml (potential)
12.7 CHU of chymosin/ml.

To test the activation of prochymosin, 1 ml of the prochymosin (+chymosin) preparation was added to 50 g of a 0.08M acetate buffer adjusted to different pH values. The samples were incubated at 22°C overnight and were then refrigerated. The milk-clotting activity was measured after various periods of time and the percentage of activated prochymosin was calculated. The results are shown in Table 1.

**Table 1**

Activation of Prochymosin in Acetate Buffer

| pH after | % prochymosin activated after | | |
|---|---|---|---|
| 1 day | 1 day | 3 days | 7 days |
| 5.28 | 18 | 25* | 30 |
| 5.22 | 19 | 27 | 35 |
| 4.99 | 31 | 56 | 69 |
| 4.93 | 31 | 46 | 76 |
| 4.79 | 54 | 87 | 94 |
| 4.78 | 55 | 91 | 98 |
| 4.72 | 56 | 84 | 98 |
| 4.52 | - | 103 | 102 |
| 4.49 | 104 | 106 | 110 |
| 4.48 | - | 110 | 119 |
| 4.23 | 104 | - | - |

* activated after 4 days.

It appears from Table 1 that the activation of prochymosin is very fast at a pH below about 4.5, whereas a longer period of time is required to activate the prochymosin at higher pH values.

**Example 2**

40 l of high-pasteurized skimmilk was concentrated to a dry matter content of about 25 % in an ultrafiltration apparatus known under the trade designation DDS-modul-20-lab, produced by De danske Sukkerfabrikker, Denmark, which has a membrane area of 0.36 m². After standardization with 60 % cream, the concentrate was heated to 72°C and then immediately cooled to incubation temperature (30°C). The concentrate was divided into 6 beakers, each containing 1.2 kg of concentrate.

The samples were inoculated at 30°C with 0.01 % of a deep-frozen bacterial concentrate comprising a mixture of 2-5 % of *Streptococcus lactis* and 95-98 % of *Streptococcus cremoris* (available under the trade designation DVS-950 culture from Chr. Hansen's Laboratorium A/S, Copenhagen, Denmark). After 1 hour 1 % of NaCl was added, and after a further 20 minutes chymosin and prochymosin were added in an amount of 0.2 ml of chymosin and no prochymosin in samples 1 and 2. 0.2 ml of chymosin and 2.3 ml prochymosin in samples 3 and 4, and 0.2 ml of chymosin and 4.6 ml of prochymosin in samples 5 and 6. The chymosin employed was a standard, commercial rennet preparation with an activity of 55.3 CHU/ml, and the prochymosin used was obtained substantially as described in Example 1 with the exception that essentially all the active chymosin had been destroyed by elevating the pH to 8.2 for several months and that the preparation had been dialyzed against water three times for 2 hours at a time to remove the sodium azide which is detrimental to starter cultures, followed by centrifugation and sterile filtration and had a potential activity of 32 CHU/ml (the slight loss of activity was caused by the treatment at elevated pH and the dialysis).

When added to the milk concentrate, the prochymosin was not observed to affect the coagulation of the milk, as the setting of the retentate occurred after about 15 minutes in all the samples, including the ones which did not contain any prochymosin. In a control sample of the retentate, to which only 5 ml of prochymosin had been added, no coagulation was observed within a period of 30 minutes.

Two hours after inoculation with the starter culture, the samples were moved to a room with a temperature of 22°C and incubated for 18 hours. The resulting curd was then stored at 14°C for 45 days.

At intervals during storage the samples were tested for:
a) pH
b) Dry matter content

6

c) Total nitrogen content in dry matter (TN)
d) Soluble nitrogen in cheese extract (SN)
e) Amino acid nitrogen content.

The dry matter content of the cheese was determined by drying about 5 g of cheese for 16 hours and weighing the residue. The total nitrogen content of the cheese was determined in 1 g of cheese by a Macro-Kjeldahl method (N x 6.37). The soluble nitrogen present in the cheese was extracted with a solution of 0.037 M $CaCl_2$ at pH 7.5. The nitrogen content of the cheese extract (SN) was expressed as a percentage of the total nitrogen content of the cheese (cf. A. Noomen, *Neth. Milk Dairy J. 31,* 1977, p. 163). Furthermore, the amino acid nitrogen content was determined by adding 5 drops of phenolphthalein solution to 20 ml of the soluble nitrogen cheese extract and titrating with 0.1 N NaOH until a pink colour developed. 10 ml of 37 % formaldehyde was added and the solution was titrated back with 0.1 N NaOH until a pink colour developed (cf. R. Jenness, S. Patton, *Principles of Dairy Chemistry,* New York 1976). The sontent of amino acid nitrogen is expressed as a percentage of the total nitrogen content in the sample.

The results appear from Table 2.

**Table 2**

| Sample No. | Ripending time (days) | pH | % dry matter content | Total protein % | Soluble nitrogen % | Amino acid nitrogen content % |
|---|---|---|---|---|---|---|
| 1 | 1 | 4.96 | 35.66 | 17.64 | 13.93 | 1.10 |
| | 7 | 4.70 | 36.89 | 18.15 | 16.39 | - |
| | 14 | 4.62 | 40.50 | 19.36 | 16.70 | 1.20 |
| | 21 | 4.45 | 43.62 | 21.66 | 16.94 | 1.28 |
| | 31 | 4.52 | 43.24 | 21.15 | 18.58 | 1.16 |
| | 45 | 4.48 | 41.86 | 20.51 | 19.44 | 1.82 |
| 2 | 1 | 4.89 | 34.33 | 17.39 | 14.56 | 1.16 |
| | 7 | 4.69 | 37.45 | 18.35 | 15.92 | - |
| | 14 | 4.60 | 39.92 | 21.15 | 15.82 | 1.21 |
| | 21 | 4.50 | 41.81 | 20.26 | 17.10 | 1.26 |
| | 31 | 4.52 | 42.64 | 20.45 | 19.71 | 1.36 |
| | 45 | 4.52 | 43.55 | 20.77 | 20.13 | 1.87 |
| 3 | 1 | 4.91 | 34.03 | 17.45 | 13.70 | 1.02 |
| | 7 | 4.67 | 37.32 | 18.47 | 17.10 | - |
| | 14 | 4.61 | 41.03 | 19.94 | 17.80 | 1.20 |
| | 21 | 4.45 | 44.44 | 21.15 | 19.84 | 1.41 |
| | 31 | 4.50 | 43.54 | 20.45 | 22.73 | 1.45 |
| | 45 | 4.49 | 44.63 | 21.02 | 25.62 | 2.21 |
| 4 | 1 | 4.90 | 34.50 | 17.70 | 13.80 | 1.06 |
| | 7 | 4.67 | 37.11 | 18.22 | 17.13 | - |
| | 14 | 4.60 | 39.68 | 19.11 | 18.99 | 1.42 |
| | 21 | 4.44 | 43.86 | 21.34 | 19.75 | 1.43 |
| | 31 | 4.50 | 42.97 | 20.77 | 23.16 | 1.52 |
| | 45 | 4.51 | 42.88 | 20.89 | 25.22 | 2.00 |
| 5 | 1 | 4.90 | 34.20 | 17.33 | 13.81 | 1.25 |
| | 7 | 4.65 | 39.90 | 19.36 | 17.70 | - |
| | 14 | 4.59 | 41.18 | 19.87 | 21.67 | 1.53 |
| | 21 | 4.43 | 47.21 | 22.68 | 23.98 | 1.97 |
| | 31 | 4.49 | 47.53 | 22.49 | 26.33 | 1.83 |
| | 45 | 4.53 | 45.11 | 22.17 | 29.24 | 2.49 |
| 6 | 1 | 4.89 | 34.29 | 17.39 | 14.96 | 1.07 |
| | 7 | 4.67 | 36.54 | 18.03 | 17.37 | - |
| | 14 | 4.60 | 40.25 | 19.68 | 19.44 | 1.38 |
| | 21 | 4.43 | 44.23 | 21.26 | 22.33 | 1.80 |
| | 31 | 4.49 | 42.09 | 20.45 | 25.64 | 1.90 |
| | 45 | 4.50 | 42.93 | 21.34 | 29.70 | 2.66 |

As shown in Table 2, prochymosin addition has a significant effect on cheese ripening. Samples 1 and 2 to which only active chymosin had been added were found to show an increase of about 5.5 % of soluble protein after 45 days, whereas an increase in the content of soluble protein of about 11.7 % and about 15. 1 % was found in samples 3 and 4 and samples 5 and 6, respectively. The amino acid nitrogen content in the samples was found to be at a constant level of about 6-9 % of the soluble nitrogent content indicating that an increase in soluble nitrogen content leads to a corresponding increase in amino acid N content in the samples to which prochymosin had been added.

The two control samples, 1 and 2, showed a soluble nitrogen content of about 20% after 45 days of storage. By adding 2.3 ml of prochymosin (samples 3 and 4) and 4.6 ml of prochymosin (samples 5 and 6), the same level of soluble nitrogen is reached in 21 and 14 days of ripening, respectively. This indicates that at least part of the prochymosin is transformed to active chymosin during cheese storage, and that this accelerates cheese ripening.

**0 150 727**

**Example 3**

Milk concentrate was prepared as described in Example 2 and divided into 6 beakers each containing 1.2 kg of retentate. The samples were inoculated at 30°C with 0.01 % of a deep-frozen bacterial concentrate comprising a mixture of 60-86 % of *S. cremoris* and *S. lactis,* 10-30% of *S. diacetylactis* and 4-10% of *Leuconostoc cremoris* (available under the trade designation DVS B-11 culture from Chr. Hansen's Laboratorium A/S, Copenhagen, Denmark). After 1 hour, 1 % of NaCl was added, and after a further 20 minutes chymosin and prochymosin were added in an amount of 0.24 ml of chymosin and no prochymosin in samples 1 and 2, 0.24 ml of chymosin and 2.75 ml of prochymosin in samples 3 and 4, and 0.24 ml of chymosin and 5.52 ml of prochymosin in samples 5 and 6. The chymosin and prochymosin preparations used in this example corresponded to the ones employed in Example 2.

The samples were further treated and tested as described in Example 2. The results appear from Table 3.

**Table 3**

| Sample No. | Ripending time (days) | pH | % dry matter content | Total protein % | Soluble nitrogen % | Amino acid nitrogen content % |
|---|---|---|---|---|---|---|
| 1 | 1 | 5.37 | 36.59 | 16.82 | 15.55 | 1.17 |
|   | 7 | 4.82 | 37.48 | 18.09 | 17.57 | 1.23 |
|   | 14 | 4.81 | 38.36 | 17.71 | 19.80 | 1.50 |
|   | 21 | 4.79 | 41.00 | 18.79 | 21.85 | 1.72 |
|   | 28 | 4.73 | 41.89 | 19.75 | 22.37 | 1.52 |
|   | 42 | 4.73 | 46.05 | 21.15 | 26.95 | 3.31 |
| 2 | 1 | 5.35 | 36.40 | 16.94 | 15.44 | 1.28 |
|   | 7 | 4.86 | 36.92 | 17.64 | 19.37 | 1.21 |
|   | 14 | 4.81 | 38.51 | 17.90 | 20.11 | 1.17 |
|   | 21 | 4.79 | 41.24 | 19.11 | 20.85 | 1.80 |
|   | 28 | 4.71 | 41.56 | 20.07 | 22.45 | 1.52 |
|   | 42 | 4.72 | 48.24 | 22.17 | 23.91 | 2.54 |
| 3 | 1 | 5.34 | 36.94 | 16.94 | 15.29 | 1.22 |
|   | 7 | 4.84 | 36.84 | 17.33 | 19.23 | 1.49 |
|   | 14 | 4.83 | 38.54 | 17.64 | 21.77 | 1.41 |
|   | 21 | 4.80 | 39.05 | 18.54 | 22.96 | 1.65 |
|   | 28 | 4.73 | 41.62 | 18.86 | 26.40 | 1.83 |
|   | 42 | 4.74 | 45.89 | 21.72 | 31.70 | 3.63 |
| 4 | 1 | 5.20 | 36.16 | 17.39 | 15.06 | 1.29 |
|   | 7 | 4.83 | 36.88 | 17.33 | 19.36 | 1.27 |
|   | 14 | 4.81 | 37.78 | 17.64 | 21.23 | 1.41 |
|   | 21 | 4.76 | 40.27 | 18.79 | 22.36 | 1.78 |
|   | 28 | 4.70 | 39.97 | 18.92 | 27.76 | 2.26 |
|   | 42 | 4.72 | 43.32 | 20.64 | 30.71 | 3.57 |
| 5 | 1 | 5.34 | 37.06 | 17.71 | 14.55 | 1.46 |
|   | 7 | 4.86 | 36.98 | 17.20 | 19.76 | 1.26 |
|   | 14 | 4.89 | 38.01 | 17.84 | 25.52 | 1.68 |
|   | 21 | 4.87 | 40.61 | 18.79 | 28.46 | 2.75 |
|   | 28 | 4.93 | 41.70 | 18.86 | 36.45 | 3.87 |
|   | 42 | 4.77 | 45.62 | 21.47 | 37.14 | 4.87 |
| 6 | 1 | 5.30 | 35.97 | 17.26 | 14.47 | 1.48 |
|   | 7 | 4.85 | 37.92 | 18.86 | 17.57 | 1.02 |
|   | 14 | 4.86 | 37.59 | 17.64 | 28.72 | 2.10 |
|   | 21 | 4.89 | 40.42 | 18.28 | 30.89 | 3.02 |
|   | 28 | 4.81 | 42.66 | 19.81 | 38.81 | 4.47 |
|   | 42 | 4.81 | 45.24 | 20.96 | 42.18 | 6.28 |

As shown in Table 3, samples 1 and 2 which only contained chymosin were found to contain soluble protein in an amount corresponding to an increase of about 9.9 % after 42 days while, during the same period, an increase in the content of soluble nitrogen of about 16.0% and about 25.1 % in samples 3 and 4 and samples 5 and 6, respectively, is obtained. The soluble nitrogen level after 42 days of samples 1 and 2 not containing any

9

prochymosin is reached after 21-28 days and 14 days in samples 3 and 4, and samples 5 and 6, respectively. Thus, the data shown in Table 3 corroborate the conclusion of Example 2, namely that prochymosin, when activated, accelerates cheese ripening. The differences in soluble protein content occurring in the the data of Tables 2 and 3 are probably caused by differences in pH, dry matter content, milk composition, amounts of enzyme added and the starter culture employed.

**Example 4**

Milk concentrate was prepared as described in Example 2, divided into 6 beakers each containing 1 kg of retentate and inoculated as described in Example 2. After 1 hour, 1 % of NaCl was added, and after a further 20 minutes, chymosin and prochymosin were added in an amount of 0.2 ml of chymosin and no prochymosin in samples 1 and 2, 0.2 ml of chymosin and 5.56 ml of prochymosin in samples 3 and 4, and 0.2 ml of chymosin and 11.12 ml of prochymosin in samples 5 and 6. The chymosin employed was a standard, commercial rennet preparation with an activity of 55.3 CHU/ml. The prochymosin used in this example was obtained by recombinant DNA techniques substantially as described in European Published Specification No. 0114 507.

The prochymosin preparations were found to contain:
11 CHU of prochymosin/ml (potential)
0 CHU of chymosin/ml.

The samples were further treated and tested as described in Example 2. The results appear from Table 4.

**Table 4**

| Sample No. | Ripending time (days) | pH | % dry matter content | Total protein % | Soluble nitrogen % | Amino acid nitrogen content % |
|---|---|---|---|---|---|---|
| 1 | 2 | 5.21 | 44.16 | 17.55 | 20.98 | 1.08 |
|   | 7 | 4.98 | 47.88 | 19.84 | 21.00 | 1.01 |
|   | 14 | 4.93 | 53.50 | 19.97 | 21.49 | 1.57 |
|   | 20 | 4.75 | 56.12 | 21.25 | 20.74 | 1.52 |
|   | 36 | 4.83 | 69.69 | 25.14 | 22.37 | 1.93 |
| 2 | 2 | 5.18 | 43.75 | 17.67 | 21.70 | 1.39 |
|   | 7 | 5.00 | 49.12 | 18.88 | 22.00 | 1.03 |
|   | 14 | 4.87 | 54.36 | 20.29 | 20.25 | 1.65 |
|   | 20 | 4.79 | 58.46 | 21.56 | 21.44 | 1.47 |
|   | 36 | 4.97 | 69.16 | 24.24 | 23.64 | 2.03 |
| 3 | 2 | 5.22 | 43.82 | 17.29 | 22.95 | 1.35 |
|   | 7 | 4.95 | 48.33 | 18.88 | 21.99 | 1.27 |
|   | 14 | 4.86 | 56.42 | 21.31 | 21.59 | 1.37 |
|   | 20 | 4.74 | 55.48 | 20.54 | 22.15 | 1.57 |
|   | 36 | 4.80 | 68.70 | 24.95 | 25.62 | 2.01 |
| 4 | 2 | 5.23 | 44.02 | 17.29 | 22.03 | 1.48 |
|   | 7 | 4.96 | 48.43 | 19.46 | 23.07 | 1.28 |
|   | 14 | 4.86 | 55.90 | 21.50 | 22.26 | 1.74 |
|   | 20 | 4.75 | 54.27 | 19.71 | 23.43 | 1.59 |
|   | 36 | 4.89 | 69.93 | 25.14 | 27.29 | 2.13 |
| 5 | 2 | 5.22 | 43.60 | 16.59 | 21.58 | 1.60 |
|   | 7 | 4.94 | 47.26 | 18.12 | 23.66 | 1.08 |
|   | 14 | 4.85 | 54.68 | 20.35 | 22.40 | 1.73 |
|   | 20 | 4.79 | 54.77 | 19.78 | 24.15 | 1.74 |
|   | 36 | 4.86 | 68.29 | 24.50 | 29.13 | 2.41 |
| 6 | 2 | 5.19 | 42.79 | 16.52 | 22.18 | 1.49 |
|   | 7 | 4.94 | 47.44 | 18.57 | 24.54 | 1.32 |
|   | 14 | 4.84 | 55.78 | 21.25 | 22.03 | 1.89 |
|   | 20 | 4.76 | 53.83 | 19.84 | 24.45 | 1.71 |
|   | 36 | 4.82 | 71.53 | 25.90 | 27.76 | 2.42 |

Samples 1 and 2 which only contained chymosin were found to contain soluble protein in an amount corresponding to an increase of about 2 % after 36 days of storage while, during the same period, an increase in the content of soluble nitrogen of about 4 % and about 6 % in samples 3 and 4 and samples 5 and 6, respectively, is obtained. Thus, the data shown in Table 4 corroborate the conclusions of Example 2 and 3 and prove that prochymosin obtained by recombinant DNA techniques may also be employed in the process of the invention. The rather slow increase in ripening, compared to Examples 2 and 3, may be caused by the relatively high dry matter content obtained in the cheese samples during storage.

**Claims**

1. A proccss for accelerating the ripening of cheese produced from concentrated milk, in which
    an inactive milk-clotting enzyme and optionally chymosin or another suitable proteolytic enzyme is added to concentrated milk, optionally simultaneously with or after adding a starter culture, to form a curd,
    at least part of the inactive enzyme is activated, and the resulting curd is stored under the usual conditions for storing cheese in order to convert it to the ripened cheese.

2. A process according to claim 1 in which the inactive enzyme is a zymogen.

3. A process according to claim 2 in which the zymogen is of animal origin.

4. A process according to claim 3 in which the zymogen is a precursor of a mammalian digestive enzyme such as an enzyme from cattle, swine, sheep or goats, or a digestive enzyme of domestic fowl.

5. A process according to claim 1 in which the inactive enzyme is of microbial origin.

6. A process according to claim 5 in which the inactive enzyme is produced by a genetically modified microorganism.

7. A process according to claim 6 in which the inactive enzyme is a zymogen.

8. A process according to any of claims 1-7 in which the inactive enzyme is prochymosin.

9. A process according to claim 1 in which an active milk-clotting enzyme is inactivated by means of an inhibitor, and the inactivated enzyme is added to the milk and converted to the active form.

10. A process according to claim 9 in which the enzyme is of animal origin.

11. A process according to claim 10 in which the enzyme is a mammalian digestive enzyme such as an enzyme from cattle, swine, sheep or goats, or a digestive enzyme of domestic fowl.

12. A process according to claim 11 in which the enzyme is bovine pepsin, porcine pepsin or chymosin.

13. A process according to claim 9 in which the enzyme is of microbial origin.

14. A process according to claim 13 in which the enzyme is one which is produced by a fungus.

15. A process according to claim 14 in which the enzyme-producing fungus is *Mucor miehel, Mucor pusillus* or *Endothia parasitica*.

16. A process according to claim 13 in which the enzyme is produced by a genetically modified microorganism.

17. A process according to any of the preceding claims in which the inactive milk-clotting enzyme is added in an amount of 10-1000 mg/100 kg of milk, preferably 20-200 mg/100 kg of milk, of the commercially purified inactive enzyme depending on the potential activity of the enzyme.

18. A process according to claim 1 in which the chymosin or another suitable proteolytic enzyme is added to the milk in an amount of 0-200 mg/100 kg of milk, preferably 20-100 mg/100 kg of milk, of the commercially purified enzyme depending on the activity of the enzyme.

19. A process according to any of the preceding claims in which the pH of the curd contaning the inactive enzyme is adjusted to a pH below 6.8, in particular a pH between 6.5 and 4.0, such as a pH of 4.6-6.2, to promote the activation of the enzyme.

**Patentansprüche**

1. Verfahren zur Beschleunigung des Reifen von Käse hergestellt aus konzentrierter Milch, dadurch gekennzeichnet, daß

ein inaktives Milchgerinnungsenzym und wahlweise Chymosin oder ein anderes geeignetes, proteolytisches Enzym, wahlweise gleichzeitig mit oder nach der Zugabe einer Starterkultur, der konzentrierten Milch zugegeben wird, um einen Bruch zu bilden,

mindestens ein Teil des inaktiven Enzyms aktiviert wird, und

der resultierende Bruch unter den üblichen Bedingungen für Aufbewahrung von Käse gelagert wird um es in den gereiften Käse zu überführen.

2. Verfahren nach Anspruch 1, dadurch gekennzeichnet, daß das inaktive Enzym ein Zymogen ist.

3. Verfahren nach Anspruch 2, dadurch gekennzeichnet, daß das Zymogen tierischen Ursprungs ist.

4. Verfahren nach Anspruch 3, dadurch gekennzeichnet, daß das Zymogen ein Vorläufer eines Säugetier-Verdaungsenzyms, wie etwa ein Enzym von Rindern, Schweinen, Schafen oder Ziegen oder ein Verdauungsenzym von Zuchtgeflügel ist.

5. Verfahren nach Anspruch 1, dadurch gekennzeichnet, daß das inaktive Enzym mikrobischen Ursprungs ist.

6. Verfahren nach Anspruch 5, dadurch gekennzeichnet, daß das inaktive Enzym durch einen genetisch modifizierten Mikroorganismus produziert wird.

7. Verfahren nach Anspruch 6, dadurch gekennzeichnet, daß das inaktive Enzym ein Zymogen ist.

8. Verfahren nach einem der Ansprüche 1 bis 7, dadurch gekennzeichnet, daß das inaktive Enzym Prochymosin ist.

9. Verfahren nach Anspruch 1, dadurch gekennzeichnet, daß ein aktives Milchgerinnungsenzym mittels eines Inhibitors inaktiviert wird und das inaktivierte Enzym der Milch zugegeben und in die aktive Form überführt wird.

10. Verfahren nach Anspruch 9, dadurch gekennzeichnet, daß das Enzym tierischen Ursprungs ist.

11. Verfahren nach Anspruch 10, dadurch gekennzeichnet, daß das Enzym ein Säugetier-Verdauungsenzym, wie etwa ein Enzym von Rindern, Schweinen, Schafen oder Ziegen oder ein Verdauungsenzym von Zuchtgeflügel ist.

12. Verfahren nach Anspruch 11, dadurch. gekennzeichnet, daß das Enzym Rinderpepsin, Schweinepepsin oder Chymosin ist.

13. Verfahren nach Anspruch 9, dadurch gekennzeichnet, daß das Enzym mikrobischen Ursprungs ist.

14. Verfahren nach Anspruch 13, dadurch gekennzeichnet, daß das Enzym ein durch einen Pilz produziertes ist.

15. Verfahren nach Anspruch 14, dadurch gekennzeichnet, daß es sich bei dem enzymproduzierenden Pilz um *Mucor miehei, Mucor pusillus* oder *Endothia parasitica* handelt.

16. Verfahren nach Anspruch 13, dadurch gekennzeichnet, daß das Enzym durch einen genetisch modifizierten Mikroorganismus produziert wird.

17. Verfahren nach mindestens einem der vorangehenden Ansprüche, dadurch gekennzeichnet, daß das inaktive Milchgerinnungsenzym in einer Menge von 10-1000 mg/100 kg Milch, vorzugsweise 20-200 mg/100 kg Milch, als handelsüblich gereinigtes, inaktives Enzym, in Abhängigkeit der potentiellen Aktivität des Enzyms, zugegeben wird.

18. Verfahren nach Anspruch 1, dadurch gekennzeichnet, daß das Chymosin oder ein anderes geeignetes, proteolytisches Enzym der Milch in einer Menge von 0-200 mg/100 kg Milch, vorzugsweise 20-100 mg/100 kg Milch, als handelsüblich gereinigtes Enzym, in Abhängigkeit der Aktivität des Enzyms, zugegeben wird.

19. Verfahren nach mindestens einem der vorangehenden Ansprüche, dadurch gekennzeichnet, daß der pH des Bruchs, der das inaktive Enzym enthält, auf einen pH unterhalb 6,8, insbesondere einen pH zwischen 6,5 und 4,0, wie etwa ein pH von 4,6-6,2, eingestellt wird, um die Aktivierung des Enzyms zu fördern.

## Revendications

1. Procédé d'accélération de la maturation de fromage produit à partir de lait concentré, dans lequel:
on ajoute au lait concentré une enzyme inactive de coagulation du lait et éventuellement la chymosine ou une autre enzyme protéolytique convenable, facultativement en même temps que l'addition d'une culture d'amorçage ou après cette addition, pour former une caillebotte,
on active au moins une partie de l'enzyme inactive, et
on conserve la caillebotte résultante dans les conditions habituelles pour la conservation du fromage pour la convertir en fromage mûri.

2. Procédé selon la revendication 1, dans lequel l'enzyme inactive est un zymogène.

3. Procédé selon la revendication 2, dans lequel le zymogène est d'origine animale.

4. Procédé selon la revendication 3, dans lequel le zymogène est un précurseur d'une enzyme digestive d'une mammifère, telle qu'une enzyme du bétail, des porcs, des moutons ou des chèvres ou une enzyme digestive d'une volaille domestique.

5. Procédé selon la revendication 1, dans lequel l'enzyme inactive est d'origine microbienne.

6. Procédé selon la revendication 5, dans lequel l'enzyme inactive est produite par un microorganisme génétiquement modifié.

7. Procédé selon la revendication 6, dans lequel l'enzyme inactive est un zymogène.

8. Procédé selon l'une quelconque des revendications 1 à 7, dans lequel l'enzyme inactive est de la prochymosine.

9. Procédé selon la revendication 1, dans lequel une enzyme active de coagulation du lait est inactivée à l'aide d'un inhibiteur, et l'enzyme inactivée est ajoutée au lait et convertit en la forme active.

10. Procédé selon la revendication 9, dans lequel l'enzyme est d'origine animale.

11. Procédé selon la revendication 10, dans lequel l'enzyme est une enzyme digestive d'un mammifère telle qu'une enzyme du bétail, des porcs, des moutons ou des chèvres ou une enzyme digestive de volaille domestique.

12. Procédé selon la revendication 11, dans lequel l'enzyme est de la pepsine bovine, de la pepsine porcine ou de la chymosine.

13. Procédé selon la revendication 9, dans lequel l'enzyme est d'origine microbienne.

14. Procédé selon la revendication 13, dans lequel l'enzyme est une enzyme produite par un fungus.

15. Procédé selon la revendication 14, dans lequel le fungus produisant l'enzyme est *Mucor miehei, Mucor pusillus* ou *Endothia parasitica*.

16. Procédé selon la revendication 13, dans lequel l'enzyme est produite par un microorganisme génétiquement modifié.

17. Procédé selon l'une quelconque des revendications précédentes, dans lequel l'enzyme inactive de coagulation du lait est ajoutée à raison de 10 à 1000 mg/100 kg de lait, de préférence 20 à 200 mg/ 100 kg de lait, de l'enzyme inactive purifiée commerciale en fonction de l'activité potentielle de l'enzyme.

18. Procédé selon la revendication 1, dans lequel la chymosine ou une autre enzyme protéolytique convenable est ajoutée au lait à raison de 0 à 200 mg/100 kg de lait, de préférence 20 à 100 mg/100 kg de lait, de l'enzyme purifiée commerciale en fonction de l'activité de l'enzyme.

19. Procédé selon l'une quelconque des revendications précédentes, dans lequel le pH de la caillebotte contenant l'enzyme inactive est réglé à un pH au dessous de 6,8, en particulier un pH entre 6,5 et 4,0 tel qu'un pH de 4,6 à 6,2 pour promouvoir l'activation de l'enzyme.

13